# EUROPEAN PATENT SPECIFICATION

(11) **EP 4 633 903 B1**
(45) Date of publication and mention of the grant of the patent: **11.11.2026**
(21) Application number: 23828787.4
(22) Date of filing: 18.12.2023
(51) Int. Cl.: B29C 33/40, B29C 33/38, B29C 33/50, B29C 70/44, B29C 70/54

(54) **APPARATUS AND METHODS FOR FORMING COMPOSITE COMPONENTS**
VORRICHTUNG UND VERFAHREN ZUR HERSTELLUNG VON VERBUNDKOMPONENTEN
APPAREIL ET PROCÉDÉS DE FORMATION DE COMPOSANTS COMPOSITES

(30) Priority: 16.12.2022 GB 202219112
(43) Date of publication of application: 22.10.2025
(73) Proprietor: Short Brothers Plc, Belfast, Antrim BT3 9DZ (GB)
(72) Inventor: WALSH, Oran, Belfast Antrim BT3 9DZ (GB); BRANIFF, Mark Anthony, Belfast Antrim BT3 9DZ (GB); WILSON, Sam, Belfast Antrim BT3 9DZ (GB)
(74) Representative: HGF
(86) International application number: PCT/GB2023/053294
(87) International publication number: WO 2024/127045

(56) References cited:
- EP-A2- 0 243 751
- NL-A- 8 800 301

## Description

### Technical Field

Apparatus and methods for forming composite components. In particular, but not exclusively, the present disclosure relates to apparatus and methods for manufacturing composite parts, moulds or tools such as in the aerospace industry, optionally that can be fabricated out of autoclave if desired.

### Background of the Invention

In the manufacture of composite parts, such as body parts in the aerospace and other related industries, moulds are typically used for fabricating composite parts using a resin. The composite materials typically employ a reinforcement such as glass, carbon, or Kevlar fibres. The manufacturing processes often involve the formation of preforms of the reinforcement and infusion of the resin to impregnate the reinforcement.

The application of the resin typically takes place under highly controlled conditions, such as of temperature, pressure, etc. Conventionally, such composite parts are manufactured using Resin Transfer Moulding (RTM) with tooling in an autoclave. Accordingly, high-precision resin composite components can be fabricated.

A typical civil air transport wing consists of a main torsion box of ribs and spars with articulated control surfaces forming the trailing edge structure. This arrangement of control surfaces experiences considerable loads during certain critical flight phases. As a consequence these structures are complex in terms of stiffness / load introduction requirements and comprise intricate design features.

A primary issue with traditional resin transfer moulding or other closed mould applications is an inherent difficulty in designing and manufacturing internal tooling accurately enough to consider the totality of machining tolerances (i.e. ensuring all the tooling will fit properly in the desired cavity). Additionally, if the internal tooling is manufactured using metallic material, extensive considerations must be given to thermal expansion and the tools must be compensated accordingly.

Furthermore, autoclave manufacture is ideally suited for high-end, precision manufacture of parts, particularly where runs of larger volume, valuable components are required. However, using autoclave for manufacturing of composite parts is cumbersome and expensive. Furthermore, there is a need for novel manufacturing methods and tooling arrangements for composite parts that are simpler and lower cost, and which enable fabrication of composite parts while allowing flexibility to compensate for the different tolerances of the components of the composite part and tooling.

NL 8 800 301 describes a process for forming an article of plastics reinforced with one or more fibre layers, the process comprising assembling one or more fibre layers round an expandable bag serving as counter-mould; placing two or more of the fibre-covered expandable bags next to each other in a main mould; expanding the bags to force the reinforcing fibre layers round the bags into contact with the walls of the main mould and to form a wall of reinforcing fibres between adjacent bags; impregnating the fibre layers with a resin composition. and curing the resin to form a reinforced moulded article with two or more hollow internal chambers.

It may be an object of one or more aspects, examples, embodiments, or claims of the present disclosure to at least mitigate or ameliorate one or more problems associated with the prior art, such as those described herein or elsewhere.

### Summary of the Invention

According to an aspect there is provided a method of fabricating a composite part as defined in claim 1.

Preferably, the reinforcing material is dry carbon fibre (UHM, HM, HTS, IM, and the like).

The method may comprise a closed mould manufacturing method, with the composite part being formed between at least two mould tools. The two mould tools may be closed and sealed for vacuum integrity at a temperature in a range of ambient temperature (e.g.20°C) to 205°C.

The mould can be manufactured from any suitable material that is usable at a temperature range of up to 205 °C and pressure of up to 7 bar and is geometrically correct. The mould must be capable of maintaining vacuum integrity. For example the mould may comprise metal, invar, carbon fibre, polyurethane, or any other suitable material for the conditions of the method. The mould may have a coefficient of thermal expansion (CTE) matching the CTE of the preform.

The elastomeric bladder may comprise an elastomer. The bladder may comprise a reinforcement such as carbon fibre-reinforced elastomer. The elastomeric bladder may be considered to be semi-flexible. However, unlike known elastomeric tooling bladders, the degree of flexibility of the elastomeric tooling bladders of the present disclosure can be carefully selected to impart a desired flexibility required for the intended application of the elastomeric tooling bladder. For example, the elastomeric bladder of the present disclosure is intended to be used a "soft tooling" in the manufacture of composite parts. The elastomeric bladder is configured to accommodate thermal expansion and contraction which may occur during the manufacture of a composite part, whilst maintaining geometrical integrity (i.e. overall shape) by virtue of the reinforced elastomer layer.

The term "semi-flexible" herein refers to a degree to flexibility that allows the vacuum bag material to deflect to some degree to accommodate thermal expansion and contraction of the vacuum bag and/or adjacent components, under the conditions encountered in use (typically over a temperature range from around ambient temperature to around 200-213 °C depending on manufacturing conditions), but having sufficient rigidity to maintain the general shape and configuration of the vacuum bag, under its own weight. That is to say, a flexible vacuum bag may in use be draped over and/or peeled from a layup or part as the case may be, whereas a semi-flexible vacuum bag can be positioned or removed as a whole. In comparison to a hard tooling surface or hard tooling, the degree of flexibility afforded by a semi-flexible vacuum bag eases separation of parts from the mould (that might otherwise be retained by suction against a hard surface such as Invar). In turn, the risk of surface damage upon release or separation of composite parts is reduced.

The elastomeric bladder may be vacuum integral. As used herein, the term vacuum integral may be defined as an ability to maintain a vacuum of a desired vacuum pressure over a defined time period. This may be specific for the intended application of the elastomeric bladder. Vacuum integral may also be taken to encompass a body which when sealed under pressure is considered to be gas tight. The term "gas tight" herein refers to the body through which permeation or flow of gas is prevented (excepting de minimis leakage or permeation) under the pressure differentials across the body encountered in use.

The elastomeric bladder may be capable of maintaining vacuum integrity to a maximum loss of 10mbar or less over a defined time period, optionally a maximum loss of 5mbar or less over the defined period. The bladder body may be configured to be vacuum integral for at least 120 thermal cycles/ cures in the manufacture of a composite parts.

The elastomeric bladder may be vacuum integral thanks to its elastomeric material. In embodiments in which the elastomeric bladder is not fully vacuum integral (e.g. due to its material), the elastomeric bladder may comprise a vacuum bag (e.g. nylon bag) disposed in an internal cavity of the disposable elastomeric bladder to make it vacuum integral.

The tooling assembly comprises a plurality of relatively rigid tools or mandrels, the elastomeric bladder being arranged intermediate the relatively rigid tools or mandrels so as to mitigate compounding of multiple tolerances associated with the respective plurality of relatively rigid tools or mandrels.

The elastomeric bladder may be configured to enact a consolidation force on a component (e.g. composite part, or on resin and preforms of reinforcement material) within a tooling assembly by way of a pressure differential. The consolidation force may be generated in atmospheric conditions or in an autoclave. The elastomeric bladder may be configured to perform a consolidation pressure at, for example, at about 20 °C to about 205 °C. The elastomeric tooling bladders of the present disclosure may be configured to be autoclave capable, i.e. able to withstand temperatures of about 180 °C without degradation. The elastomeric bladder may be capable of withstanding at least 120 curing cycles without degradation.

The elastomeric bladder may be configured to act as an 'expansion joint' between tightly controlled hard tooling and may alleviate tolerance stack-ups. The elastomeric tooling bladder may also aid in air extraction and resin flow distribution across a component part during manufacture of the component part. This may increase wet out whilst reducing the infusion time for the manufacture of a composite part.

The elastomeric bladder may be employed to control areas between spars of the composite part. The elastomeric bladder may be intercalated or disposed between hard tooling elements of the assembly (e.g. between the mould and a mandrel or between two mandrels. The (elastomeric) bladder may be arranged next to the mandrel or under the preform (e.g. spar preform) or the mandrel. The elastomeric bladder may provide a consolidation pressure (Atmospheric or Autoclave) either directly on a preform or on a mandrel or other rigid tooling. The bladder may permit resin flow in plane (fibre direction ) and also out of plane (through the thickness of the fibre) by the bladder's resilience/flexibility. In addition, the bladder and/or the mandrels may be wrapped in a resin distribution medium (e.g. ply and/or flow mesh). This resin distribution medium may facilitate insertion and removal of the mandrel(s) and bladder(s) prior and post injection of resin as well as aid in the distribution of resin around the entire surfaces and into the fibres of the preform to displace air and minimise voids in the resin within the composite part.

Advantageously, the elastomeric bladder may have a degree of flexibility which may be able to account for slight variations in size of the hard elements of the assembly (e.g. mandrel(s), mould, preform(s)). This may therefore increase the tolerance levels of the hard tooling and preform sizing that the tooling arrangement is capable to work within while still manufacturing a composite part of the correct dimensions. Since the accuracy in the sizing of the hard tooling of the tooling assembly does not need to be as high as in prior art tooling assemblies, the manufacturing costs may be reduced. This may also facilitate the removal of the tooling elements of the tooling arrangement (bladder(s), mandrel(s), mould) after injection and curing of the resin compared to methods employing only hard tooling.

The bladder may act as a resilient member capable of providing a degree of flexibility to accommodate for a sum of tolerances of the hard components of the system (mould, preform, mandrel) while still ensuring that the resin is consolidated against a rigid surface where it is most needed (e.g. at a leading edge or in areas receiving more mechanical stress such as areas configured to bear fixings or where other components need to be attached). In other words, the bladder between tightly controlled hard tooling and may alleviate tolerance stack-ups. Solid components (e.g. mould, mandrel) may be employed in areas where the where dimensional tolerances of the composite part are highly critical. Furthermore, having a resilient (flexible or semi-flexible) component may facilitate removal of tooling elements from the tooling arrangement port formation of the composite part when compared to methods employing solely rigid tooling.

The method may comprise applying a consolidation force on the composite part by way of a pressure differential with the elastomeric bladder. The pressure differential may comprise between about 1 bar/atm and about 7 bar/atm, for example from about 1 to about 6.5, or from about 1 to about 6, or from about 1 to about 5, or from about 1 to about 5.5 bar/atm, or from about 1 to about 5 bar/atm, or from about 1 to about 4.5 bar/atm, or from about 1 to about 4 bar/atm, or from about 1 to about 3.5 bar/atm, or from about 1 to about 3 bar/atm, or from about 1 to about 2.5 bar/atm, or from about 1 to about 2 bar/atm, or from about 1 to about 1.5 bar/atm, or from about 2 to about 5 bar/atm, or from about 2.5 to about 5 bar/atm, or from about 3 to about 5 bar/atm, or from about 4 to about 7 bar/atm, or from about 5 to about 6 bar/atm, or from about 5 to about 7 bar/atm. Preferably, the consolidation force may be about 1 bar/atm.

The rigid tools (e.g. mould and/or mandrel) may comprise any suitable material. For example, the rigid tools (mould and/or mandrel) may comprise a matrix material selected from Epoxy (infusion or Prepreg), BMI or Benzoxazine. Rigid tools may comprise metals. The rigid tools may comprise heat-non-conductive materials such as plastics or glass. The rigid tools (mould and/or mandrel) may comprise a reinforcement such as carbon (e.g. UHM, HM,HTS,IM etc.), glass fibre or Kevlar fibre.

The mandrel may be any hard tooling with a coefficient of thermal expansion matching the CTE of the preform. For example, when the preform is formed from dry carbon, the mandrel may be a solid carbon mandrel. This may enable uniform cooling and minimal disturbance of the resin by a temperature gradient in the components of the arrangement while cooling. The mandrel may be placed in the tooling assembly against the preform to consolidate the resin against the resin minimising voids.

The mandrel may comprise a solid carbon mandrel, wherein the directionally laminated and/or machined to provide a differential coefficient of thermal expansion ("CTE"), the differential CTE providing a relatively higher CTE in a first direction relative to a second direction.

The differential CTE may provide a consolidation pressure on the composite part during curing.

The mandrel may be below nominal size at a temperature due to the differential CTE. The temperature may be ambient temperature. The temperature may be an elevated temperature (above ambient temperature), such as an infusion temperature.

Preferably, the rigid tools (e.g. mandrel(s) and/or mould) may have a CTE matched to the CTE of the component. The mandrel(s) may be solid carbon fibre mandrels. The carbon mandrels may have a low in-plane CTE behaviour. The mandrel may have a high CTE out-of-plane behaviour. The mandrel(s) may be employed or located in areas of the composite part which have critical dimensional tolerances(e.g. on an aircraft wing an aft spar may be a critical interface for trailing edge attachments such as flaps, ailerons, or a combination of flaperons).

Advantageously, the rigid tooling (e.g. carbon mandrel) may be arranged so as to utilise its high through thickness CTE to achieve improved air extraction at room temperature, improved resin distribution (reduced infusion/time) at the infusion temperature and improved tooling release.

The method may comprise directly heating at least a portion of the tooling assembly, such as directly heating a carbon fibre mandrel (e.g. heating the material of the caron fibre mandrel) and/or heating the bladder from inside. The method may comprise induction heating and/or infra-red heating.

In embodiments in which the tooling assembly (e.g. mandrel) comprises a non-conductive material (e.g. plastics or glass), induction may heat an electrically conductive susceptor such as graphite, iron balls or carbon black. Induction of the susceptors into the tooling can be in the form of interlaminar films placed during lay-up or introduced directly into the resin/matrix prior to infusion.

The hard tooling (e.g. mandrel or mould) may comprise pitch-base fibres instead of (traditional and less conductive) PAN based fibres. Pitch based fibres have a highly oriented molecular structure. By virtue of the initial melt spinning during which the precursor is pulled while being heated, the process may result in an excellent thermal conductivity up to 800W/(m*k), (Copper =~400W/m*k). Hard tooling (e.g. mandrels) with pitch based fibres may be capable of being integrally heated e.g. by induction.

The rigid tooling (e.g. the mandrel, and/or the mould) may comprise a network of voids or channels (resin raceways). The resin raceways may provide a path for the resin to completely infuse the composite part and/or preform (e.g. cover the entire surface and penetrate voids between fibres of the preform - or infuse in plane and through the thickness of the fibres). The preform (e.g. an outer skin) may comprise a peripheral raceway extending around the entire perimeter of the composite part or preform so as to infuse resin on the entire surface of the preform (in use). Additionally, or alternatively, the tooling may comprise cure mandrel resin feed lines (secondary raceways). The rigid tooling (e.g. cure mandrel) feed lines (primary and/or secondary raceways) may facilitate adequate resin delivery to the stiffening members or preforms.

The bladder (flexible or semi-flexible tooling) may be heated. The bladder may be heated by infra-red heating. The bladder may be hollow. The bladder may define an internal cavity. The bladder may comprise an IR heating element or tube. The IR heating element or tube (IR heater) may be capable of efficiently heating up the tooling and composite part. The IR heating element may comprise Quartz, halogen, tungsten or carbon filament.

The method may employ heating the bladder as well as integrally heating the hard tooling (e.g. mandrel(s)) to improve performance. Employing tooling that can be directly heated (e.g. bladder and/or mandrel(s) may speed up the heating rate and therefore allow for out of autoclave infusion and curing of resin. This may in turn decrease the costs of manufacture of composite parts. Alternatively, the method may also be performed in an autoclave, for example using solid metallic hard tooling (mandrel(s) and mould(s) for rapid heating).

In the method, injecting the resin may comprise infusing the composite part from the outside-in. The tooling may comprise a peripheral resin feed network. Peripheral resin distribution methods infuse the (composite) part or preform from the outside to inside. This may facilitate the requirement for vacuum ports to extract any remaining trapped air or volatiles.

The method may comprise infusing the composite part from the inside - out. The resin may be infused directly into the cure mandrel. The cure mandrel may define raceways for feeding the resin into the tooling from the inside-out. The resin may travel initially internally within the mandrel before entering an external resin feed network on its face. To further aide infusion, the elastomeric bladder may be wrapped in a resin distribution medium which is 'fed' by the mandrel raceway channels. This resin distribution medium may permit resin flow on the preforms and composite part in plane (fibre direction) and also out of plane (through the thickness of the fibre).

Therefore, in the method, the resin may be supplied via one or more raceways on the tooling (e.g. on the mould and/or the mandrel), the raceways being selected from: peripheral; primary; secondary; and/or mandrel-fed.

The resin distribution medium may be configured to be fed by one or more tooling (e.g. mandrel or mould) raceway channels.

The method may include a vacuum-only (resin) infusion phase, at least during or throughout an initial phase/s of infusion. The method may include a vacuum-only infusion phase during or throughout at least a majority of the infusion.

Resin infusion may be performed at an infusion temperature, the infusion temperature being in a range of from about 30°C to about 135°C, or from about 30°C to about 120°C, or from about 50°C to about 100°C, or from about 100°C to about 135°C.

The infusion may not require or involve an application of external pressure, such as an infusion pressure, at least during or throughout an initial phase/s; and optionally only involves an application of external pressure during a final phase of the infusion.

Curing may be performed at a curing temperature, the curing temperature being in a range of about 50°C to about 205°C.

The method may comprise manufacturing a plurality of composite parts; and wherein the method comprises sequentially manufacturing the plurality of composite parts with a same elastomeric bladder for at least 50 cycles, optionally 120 cycles or more.

The method may comprise forming dry carbon. The method may comprise forming dry carbon into a preform or multiple preforms. The method may comprise forming a single-skin preform The method may comprise a stretch forming technique for forming the preform(s).

In traditional forming preform forming techniques a dry fibre plies (e.g. dry carbon) are laid on a forming tool for imparting the dry carbon the desired shape. The arrangement is bagged up (e.g. in a nylon bag), the bag is clamped immediately adjacent to the forming tool (or profile or outer surface thereof) and vacuum is applied. The bag may be slack when no vacuum is applied and may follow the profile of the forming tool under pressure differential (vacuum). The outline of the bag may follow the outline of the forming tool along all or most of the length and width of the forming tool. The bag may be secured over the forming tool in a substantially straight or cylindrical configuration. The force applied on the dry fibre (by the pressure differential and the bag) is equal across the entire profile of the preform or forming tool. However, with these technique it is common to obtain wrinkles at the leading edge (at the apex or top) if there was slack fibre.

In contrast, in the novel stretch-forming technique described herein, the reinforcement fibre (e.g. dry carbon fibre) may be laid on a forming tool and bagged up (e.g. in a nylon bag or a silicone membrane), pulling the bag in a generally down and away direction (i.e. towards the periphery of the forming tool and towards the end opposite the top/apex/ highlight,(i.e. clamping the bag away from the forming tool). Therefore, the bag may contact one end of the forming tool and it may be stretched down and away from the forming tool in a flared configuration. The bag may be slack at the opposite end (the end near the base or bridge of the forming tool) at atmospheric pressure. Under vacuum (negative pressure differential), the bag will contact the forming tool and fibres laid thereon along the entire length of the forming tool but the force applied by the bag may be greater in areas where the bag is under greater tension (e.g. at the top) than in areas where is under lower tension (slack, at the bottom). The bag may be clamped away from one end (e.g. base or bridge) of the forming tool (in a flared configuration). The bag may be secured over the forming tool in a substantially triangular configuration. This technique may ensure the consolidation force is applied gradually from a leading edge of the preform aft-wards. Under pressure differential (vacuum), the bag may apply greater force on the fibres on the locations where there is intimate contact between the bag and the fibres/forming tool (e.g. at the leading edge or top). The further away the bag is from the forming tool, the lower the consolidation force that is applied to the fibres/forming tool. The stretch-forming technique may produce a seamless integral leading edge on the preform (i.e. at the highlight or top). The method may comprise forming the skin preform as a single piece to produce a seamless integral surface, for example a seamless integral leading edge. The method may comprise hereby washing/ironing all slack fibre to the periphery. This may avoid creases or wrinkles, particularly on leading edges of the part which are obtained with other prior art methods.

The preform(s) may define or contain complex features such as one or more of: local ply build-ups, ramps, flare and twist. The method may comprise subsequently loading the dry preforms into a (low cost) carbon fibre mould. The method may comprise subsequently loading the dry preforms into the carbon fibre mould in combination with one or more mandrels (e.g. solid carbon mandrels or other hard tooling) and a elastomeric bladder tooling. The mandrels or other hard tooling may match the CTE of the part. Their function may be to act as blocks that lie against the part so that the part maintains the required dimension when the consolidation force (e.g. pressure differential) is applied inside the bag.

The method may comprise assembling the respective elastomeric bladder/s and the mandrel/s in a first assembly step; overlaying the preform (e.g. single-skin preform) on or around the assembled elastomeric bladder/s and mandrel/s in a second assembly step and then closing within the tooling assembly, prior to the sealing for vacuum.

The method may comprise installing a spar preform and the elastomeric bladder in the first assembly step, before the initial preform of the skin has been overlaid.

The method may comprise performing at least the first assembly step with the respective elastomeric bladder/s and the mandrel/s in a first orientation (e.g. horizontal orientation). The method may comprise temporarily holding open the one-piece skin preform for the installation of the spar preform/s and/or the mandrel/s and/or the elastomeric bladder/s.

The method may comprise translating the assembled elastomeric bladder/s and the mandrel/s from the first orientation to a second orientation substantially perpendicular to the first orientation (e.g. from a horizontal orientation to a vertical orientation). Alternatively, the method may comprise performing all assembly steps in the same orientation (e.g. vertical orientation). Advantageously, performing the assembly in a vertical orientation may obviate the need to bending the outer skin preform (e.g. single skin) to open it up to insert the components when the outer skin is inserted in a half mould, as this may distort the surface of the outer skin at the fold (e.g. leading edge). However, when the assembly is performed in a horizontal orientation and the lower face of the skin is inserted in the lower half-mould it is necessary to hold the upper face of the outer skin open in order to be able to insert all components of the composite part and the tooling therein.

The method may comprise inserting the elastomeric bladder into the mould after the preform has been loaded.

The method may comprise inserting the elastomeric bladder into the preform in the mould longitudinally, such that the elastomeric bladder is installed within the preform.

The method may comprise wrapping the elastomeric bladder in peel ply and/or flow mesh for insertion. Advantageously, this may facilitate gas (e.g. air) extraction and resin flow, and it may make the positioning of the bladder inside the single skin preform easier.

The method may comprise forming at least one spar. The elastomeric bladder may be associated with a spar-forming mandrel. The bladders may match to the mandrels on either side.

The method may comprise installing a spar preform and the elastomeric bladder after the initial preform of the skin has been loaded or wherein the method comprises installing a spar preform and the flexible elastomeric in the preform of the skin before loading the preform of the skin on the tooling.

The method may comprise forming the preform as a one-piece skin preform, the one-piece skin comprising a wrap-around preform to define upper and lower skin portions with the one-piece skin preform, optionally wherein the one-piece skin preform includes a leading edge. The one-piece skin preform may vary in thickness from root to tip; and optionally it may comprise ply features, such as ply ramps and/or build-ups along its length.

The method may comprise forming dry carbon fibre into at least two preforms, the two preforms defining an upper skin preform and a lower skin preform.

The method may comprise bagging the assembly of preforms, mandrel(s) and bladder(s) (e.g. in a nylon bag). The method may comprise installing the tooling arrangement in an oven or an autoclave. Vacuum/resin fittings of the tool may be connected for injection of resin.

The method may comprise infusing resin in the tooling arrangement after assembly of all components. The method may comprise applying vacuum (negative pressure differential) to the bag during and/or after infusion of the resin. The method may comprise closing the mould (e.g. approaching two mould tools to close the mould) to form a one piece assembly. The method may comprise sealing the mould for vacuum integrity. The method may comprise sealing the mould for vacuum integrity (e.g. at about 120°C-135 °C).

The method may comprise applying a consolidation force to the resin to form the composite part. A consolidation force may be applied by way of pressure differential by the bladder (e.g. positive pressure). The pressure differential may comprise around 1bar / atm. The pressure differential may comprise from about 0.5 bar / atm to about 3 bar / atm, for example from about 0.5 to about 2.5 bar / atm, from about 0.5 to about 2 bar / atm, from about 0.5 to about 1.5 bar / atm, from about 0.5 to about 1 bar/atm, from about 1 to about 2.5 bar / atm, from about 1 to about 2 bar/ atm, from about 1 to about 1.5 bar /atm, from about 1.5 to about 2 bar / atm. Preferably, the pressure differential may be 1 bar / atm.

The method may include a vacuum-only (resin) infusion phase, at least during or throughout an initial phase/s of infusion. The method may include a vacuum-only infusion phase during or throughout at least a majority of the infusion. Application of positive pressure in later phases may be is possible. The method may comprise vacuum only infusion of the entire one composite part (e.g. torque box assembly). The method may comprise vacuum only infusion of the entire one piece composite part (e.g. torque box assembly) at a temperature from about 30 °C to about 120°C-135 °C. The method may comprise curing out of autoclave.

The method may comprise curing the resin to form the composite part. The method may comprise curing out of autoclave (e.g.. at about 205°C).

The method may comprise allowing the composite part to cool down (e.g. to ambient temperature).

The method may comprise removing the composite part and tooling arrangement from the mould or moulds.

The method may comprise post-forming treatment of the composite part (e.g. machining, heating and remoulding, etc.). However, post processing treatment may usually not be required with the method of the invention. The method may comprise removing the composite part from the tooling. The method may comprise removing the bladder and the mandrel(s) from the composite part.

The composite part may comprise one or more of: a torque box; a flight control surface; a wing, or at least a section or portion thereof; a flap; an aileron; a H-stab; a V-stab.

Advantageously, the method enables the assembly of multiple preforms and infusion of resin in a single step and accounts for potential variations in dimensions of the components due to their different tolerances by providing an expansion joint effect that can accommodate for these tolerances. The result is achieving a composite part of the correct dimensions in a single step, minimising the post-processing steps (e.g. machining). Manufacturing a one piece (integral) composite part in a single step is cheaper as it does not require the assembly of parts, and it may lead to lighter parts which do not require fasteners. Furthermore, it may not require any gap shim processes.

Accordingly, the method may comprise forming the composite part without any re-forming, such as post-curing re-forming (e.g. by heating and moulding).

The innovative method of the invention provides a unique combination of "hard and soft" tooling to create a smooth (seamless) aerodynamic profile while maintaining internal dimensional accuracy. This may enable manufacturing of integral component parts in one step, thus dispensing the need for rib and/or bracket attachments on the composite part, and therefore reducing the wright of the composite part and its manufacturing cost without compromising on performance.

Furthermore, the flexible vacuum integral tooling (bladder) offers composite part (or component) consolidation.

The flexible "soft" tooling (bladder) allows the extraction of otherwise "trapped" tooling post consolidation of the part due to local internal ply build-ups (e.g. access panel reinforcement).

The flexible "soft" tooling (bladder) significantly reduces risk of complex hard tooling tolerance stack-ups & CTE compensations common with traditional RTM tooling.

The innovative method provides the ability to tailor composite "hard" tooling CTE to aid/improve processing and/or component quality.

Advantageously, the innovative method enables manufacture of composite parts (e.g. aircraft torque box) in one piece and reduce the manufacturing costs by reducing the number of assembled components, reducing the number of fasteners required, eliminating shim requirement (zero shim), enabling the use of lower raw material costs for resin infusion, and providing out of autoclave capability reduces the capital equipment cost.

Furthermore, within the context of aerospace technology, composite parts manufactured by the present methods may have improved performance. The parts may lead to increased fuel efficiency via integrated leading edge and laminar flow potential, reduced weight of the parts (reduced fastener count), potential for reduced radar signature cross/section and reduced lightning strike risks.

In contrast, state of the art technologies have significant drawbacks compared to the present method. Resin Transfer Moulding (RTM) requires a very high capital expense for the press and supporting infrastructure. It has high cost/weight limits component size. The complete solid tooling employed requires high precision and very accurate tooling CTE compensation to avoid tolerance stack-ups. Edge only infusion requires high infusion pressures.

Assembled multi-component torque box techniques requires increased assembly time and cost (labour), has shim requirement,, requires more fasteners (high cost, weight penalty, reduced aerodynamic performance, potentially increases radar signature) and it requires capital expenditure on assembly jigs.

Alternative tooling bladders are inherently not vacuum integral (and therefore require additional internal nylon tubes), involve high cost (tooling manufacture, reforming process and tool life limitations). The control of spar web "straightness" is compromised due to the flexibility of the material at high temperature and is limited to out of autoclave vacuum only consolidation forces only.

The method may comprise an out-of-autoclave method. In other words, the method may be performed outside an autoclave. The out-of autoclave resin infusion may reduce costs while maintaining high fibre volume fraction and low voids in the composite part. Therefore, the method may provide an alternative to fabrication in an autoclave. The method may also be autoclave-compatible. The method may be performed in an autoclave.

In another aspect there is provided a composite part comprising an integrally-formed leading edge, the composite part comprising a single-skin such that the part comprises a one-piece component defining the leading edge. The composite part may further comprise at least one spar, optionally it may comprise multiple spars. The at least one spar may be disposed inside the single-skin component.

The composite part may be manufactured in a range of shapes and sizes including:
straight; curved or following a contour as required. The composite parts formed by this method may be used in aerospace construction such as for wings. The method may be utilised for the fabrication of aerostructures. The aerostructures may be primarily flight control surfaces. For example, the composite part may comprise one or more of: a torque box; a flight control surface; a wing, or at least a section or portion thereof; a flap; an aileron; a H-stab; a V-stab. The formed composite part may be in the form of an extended longitudinal structure.

The composite part may be formed from a range of materials including any one of or combination of the following: Fiberglass; thermoplastics; Carbon/Epoxy; Carbon/BMI such as unidirectional Carbon/BMI (i.e. thermosetting bismaleimide resins); and Fiberglass/Epoxy.

The method may comprise the fabrication of a one-piece Out-of-Autoclave cocured coinjected stiffened aircraft torque box with integral laminar flow enabling leading edge. The method may comprise the fabrication of a multi-spar torque box.

In high end technologies employing parts comprising composite materials, such as in aerospace, it is desirable to produce seamless integral parts/components of large dimensions, preferably in as few pieces as possible. Manufacturing parts with seamless surfaces may be particularly desirable for components defining a leading edge (e.g. portions of wings, and the like in aerospace).

A solution for this is to form the skin of the composite part (e.g. skin of an aerospace torque box) as a single piece. Forming a one piece skin with dry carbon fibre into an aerofoil section using a traditional nylon bagging approach is very difficult. Other methods such as silicone diaphragms are available but they are high cost/rate production solutions. If the component is 'bagged' up using traditional practices and vacuum applied, the pressure will act equally on all areas and force any slack fibre to consolidate and wrinkle. This is especially prone in the leading edge area of the composite part.

Also disclosed is a method of manufacturing a preform for a composite part.

The method may comprise providing an elastomeric bladder within a tooling assembly, such that compounding of multiple tolerances associated with relatively rigid tooling components is at least reduced.

The method may comprise stretch-forming a single-skin preform with bagging whereby a consolidation force is progressively applied from a first portion of the preform towards a second or further portion(s) of the preform which is distally located from the first portion. The method may comprise applying a greater consolidation force at the first portion relative to the consolidation force applied at the second or further portions distally located from the first portion of the preform. The stretch forming method may be as described above.

As described herein above, in the stretch-forming technique, the reinforcement fibre (e.g. dry carbon fibre) may be laid on a forming tool and bagged up (e.g. in a nylon bag or a silicone membrane), pulling the bag down and away from the forming tool ( and clamping/securing the bag away from the forming tool. In other words, the bag may contact the highlight of the forming tool (or top, apex or furthermost end of the forming tool relative to the base of the forming tool) and the reinforcement fibres laid thereon. The securement/clamping location may be far away enough from the forming tool (towards its periphery) so as to provide tension at a leading end of the forming tool while allowing the bag to still contact the forming tool (e.g. by flexible deformation) under vacuum without breaking.

The bag may contact the forming tool (and reinforced fibres laid thereon) at one end but not at the opposite end of the forming tool. Therefore, the bag may contact one end of the forming tool and it may be stretched away from the forming tool in a flared configuration. The bag may be clamped away from one end of the forming tool (in a flared configuration). The bag may be arranged over the forming tool and pulled tight down and away from the forming tool. The bag may be secured over the forming tool in a triangular arrangement.

This technique may ensure the consolidation force is applied gradually from a leading edge of the preform aft-wards. Under pressure differential (vacuum), the bag may apply greater force on the fibres on the locations where there is intimate contact between the bag and the fibres/forming tool. The further away the bag is from the forming tool, the lower the consolidation force that is applied to the fibres/forming tool. The stretch-forming technique may produce a seamless integral leading edge on the preform (i.e. at the highlight or top). The method may comprise forming the skin preform as a single piece to produce a seamless integral surface, for example a seamless integral leading edge. The method may comprise hereby washing/ironing all slack fibre to the periphery. This may avoid creases or wrinkles, particularly on leading edges of the part which are obtained with other prior art methods.

The first portion may be a leading edge of the preform. The second portion may be an aft portion of the preform. Therefore, the method may comprise stretch forming a single-skin-preform with bagging whereby a consolidation force is progressively applied from a leading edge of the preform aft-wards. The method may comprise applying a greater consolidation force at the leading edge relative to one or more portions aft-wards of the leading edge of the preform.

Advantageously, applying the consolidation force progressively across different sections of the preform may have the effect of washing/ironing any creases (or slack fibre in reinforced composites) to the periphery of the preform. The ironing effect may be particularly beneficial for forming single-skin preforms bearing a leading-edge portion of the composite part.

The method may comprise integrally-forming a single-skin preform so as to form a one-piece skin component. The dry fibre skin (single skin preform) may be "preformed" or consolidated in one piece. The manufacture of the preform may not require an assembly of a plurality of skins. The single-skin preform may comprise an intermediate portion. The intermediate portion may comprise a leading edge. The leading edge may be defined at an intermediate portion of the single skin. The intermediate portion may be defined between two respective aft portions of the single skin.

The single skin preform may vary in thickness along its length between a root end and a tip end. The tip end may be the first portion. The root end may be an aft portion. The root end may be a second portion and/or a third portion.

The single-skin preform may have any suitable shape. For example, the single skin preform may have a substantially C-shape.

The method may comprise laying carbon fibre/dry carbon on a tooling base and shaping the preform (e.g. the single skin preform) against the tooling base at a temperature above room temperature (e.g. about 120°C-135°C). When the CTE of the tooling base and the CTE of the preform do not match, differences in cooling rates between the materials can cause the dry carbon of the preform to form wrinkles from slack fibres in certain regions (e.g. at a leading edge).

The tooling base may comprise any suitable material that is usable at a temperature range of up to 205 °C and pressure of up to 7 bar and is geometrically correct. For example the tooling base may comprise metal, invar, carbon fibre, polyurethane, or any other suitable material capable of withstanding the conditions of the method (temperature, pressure, forces involved). The tooling base may be a solid metallic tooling. A solid metallic tooling may provide rapid heating and cooling and it is autoclave-compatible.

The tooling base may have a coefficient of thermal expansion (CTE) matching the CTE of a preform. Alternatively, the tooling may have a CTE not matching the CTE of a preform. In those embodiments, additional steps may need to be taken upon cooling the formed preform to prevent wrinkle formation as a result of expansion and contraction of the tooling at a different rate to the preform. The tooling may comprise a low-cost carbon tooling. The tooling may be a solid polyurethane tooling. The method may comprise providing a polyurethane forming tool mould or tooling to minimise costs and casting or manufacturing moulds employing a material with a CTE matching the CTE of the preform. For example, a (lower cost) polyurethane forming tool cast may be used to form a carbon-reinforced resin mould. Providing a polyurethane tooling may decrease the cost of manufacture while still suitably shaping the preform. The polyurethane tooling base may be suitable for out-of-autoclave methods.

The in embodiments in which the CTE of the base tooling (or forming tool) does not match the CTE of the material of the preform (e.g. dry carbon) improved method may comprise forming a carbon-reinforced resin mould directly on the base tooling and then forming the preform on the carbon reinforced resin mould disposed on the base tooling.

The method may comprise laying a slip skin (e.g. a carbon fibre slip skin) onto the tooling base and machining it to form a carbon-reinforced resin mould. The method may comprise temporarily or removably fixing the slip skin to the tooling base for machining the slip skin into the shape of the tooling base forming tool (i.e. to form the slip skin mould). The slip skin may be fixed to the tooling base at a first end of the slip skin. After machining, the slip skin may be unpinned and simply laid on the tooling base (float).

The method may comprise laying dry carbon on the (shaped) slip skin disposed on the tooling base, forming the preform (e.g. single-skin preform) at a raised temperature, and allowing the preform to cool down on the slip skin (mould).

The coefficient of thermal expansion (CTE) of the slip skin mould matches the coefficient of thermal expansion of the preform material (carbon fibre). Advantageously, matching the CTE of the slip skin and the preform allows the preform to cool down independently from the tooling base. This in turn minimises the formation of creases or wrinkles on the preform upon cooling.

At least one of the tooling base could be manufactured from materials such as epoxy, solid metal (e.g. low CTE metal such as Inver, polyurethane, and the like. The slip skin may comprise dry carbon / carbon fibre.

The slip skin and/or the preform may be manufactured from a resin infusion or a prepreg (e.g. pre-impregnated fibres and an at least partially cured polymer matrix or resin).

The method may comprise temporarily or removably fixing the slip skin to the tooling base for machining the slip skin. The slip skin may be fixed to the tooling base at a first end of the slip skin. The method may comprise machining the slip skin preform to a desired profile. The slip skin may be unpinned and simply laid on the tooling base (float).

The method may comprise laying dry carbon on the (shaped) slip skin disposed on the tooling base, forming the preform (e.g. single-skin preform) and allowing the preform to cool down on the single skin preform.

Also disclosed is a method of forming a spar or stiffener preform.

The spar or stiffener preform may be formed using a preform tool. The method may comprise laying oversized plies of carbon fibre / dry carbon on the preform tool to impart the desired shape on the dry fibre and trimming the excess length of the dry fibre from the preform. Preform spar formed in this way may be then assembled to other preform parts by separating the hot preform from the tooling base after it has been formed for allowing the preform to cool down independently from the tooling base. Advantageously, this may prevent the formation of fibre wrinkles or creases on the one piece skin preform.

Alternatively, the at least one spar or stiffener may be formed without a preform tool. The at least one spar or stiffener may be formed by providing plies of (e.g. carbon) fibre of the required size (i.e. net-sized plies) (e.g. by digitally sizing the plies and cutting them with an ultrasonic fabric cutter) and laying the cut fibres/plies directly onto cure mandrel (e.g. solid carbon cure mandrel), bagging the assembly and applying a consolidation force, optionally wherein the consolidation force is pressure differential. Advantageously, the net-edge manufacturing method for spars achieves a very accurate net edge preform and does not require additional trimming.

The spar may have any suitable shape. For example, the spar may have a substantially "I" shape.

The manufacture of the preforms (e.g. single-skin preform and/or spar preform) may be performed out of autoclave.

The assembly of the preforms may be performed by any standard method in the art.

The preforms may be assembled by the method of the first aspect.

The steps of the methods disclosed herein may be performed in any order.

According to another aspect there is provided a composite part manufacturing tooling assembly, the tooling assembly comprising a mould; a plurality of relatively rigid tools or mandrels and a elastomeric bladder; wherein the elastomeric bladder and the plurality of relatively rigid tools or mandrels are incorporated in the tooling assembly for vacuum sealing. The elastomeric bladder is arranged intermediate the relatively rigid tools or mandrels so as to mitigate compounding of multiple tolerances associated with the plurality of relatively rigid tools or mandrels.

The mould may comprise any of the features of the mould described in the first aspect.

The elastomeric bladder may comprise a vacuum integral bag. The elastomeric bladder may be vacuum integral on its own. Alternatively, the elastomeric bladder may comprise a vacuum bag (such as a nylon bag) disposed in its cavity (i.e. disposed inside) to render the bladder vacuum integral. The elastomeric bladder may have any of the features described in the first aspect of the invention.

The elastomeric bladder may be wrapped in a resin distribution medium (peel ply and flow mesh).

The mandrel may comprise any of the features of the mandrel described in the first aspect. For example, the mandrel may comprise a solid carbon mandrel, wherein the directionally laminated and/or machined to provide a differential coefficient of thermal expansion ("CTE"), the differential CTE providing a relatively higher CTE in a first direction relative to a second direction. The differential CTE may provide a consolidation pressure on the composite part during curing. The mandrel may be below nominal size at a temperature due to the differential CTE. The temperature may be ambient temperature. The temperature may be an elevated temperature, such as an infusion temperature.

Embodiments of the disclosure will now be described, by way of example only, with reference to the appended pages.

It will be clear to those of skill in the art that the above- and below-described embodiments are merely exemplary, and that various modifications and improvements thereto may be made without departing from the embodiments described. For example, the tooling and the component may be a range of shapes and sizes. The tooling and the component may also be made a range of suitable materials. Likewise, where methods are performed out of autoclave, such as to save on costs, the methods may also be applicable to in-autoclave fabrication - such as where similar benefits may also be achieved.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as disclosed in any aspect, example, claim or embodiment of this disclosure, and a machine-readable storage storing such a program. Still further, embodiments of the present disclosure may be conveyed electronically via any medium such as a communication signal carried over a wired or wireless connection and embodiments suitably encompass the same.

The claims should not be construed to cover merely the foregoing embodiments, but also any embodiments which fall within the scope of the claims.

Illustrative examples are appended in the following pages.

### Description of the figures

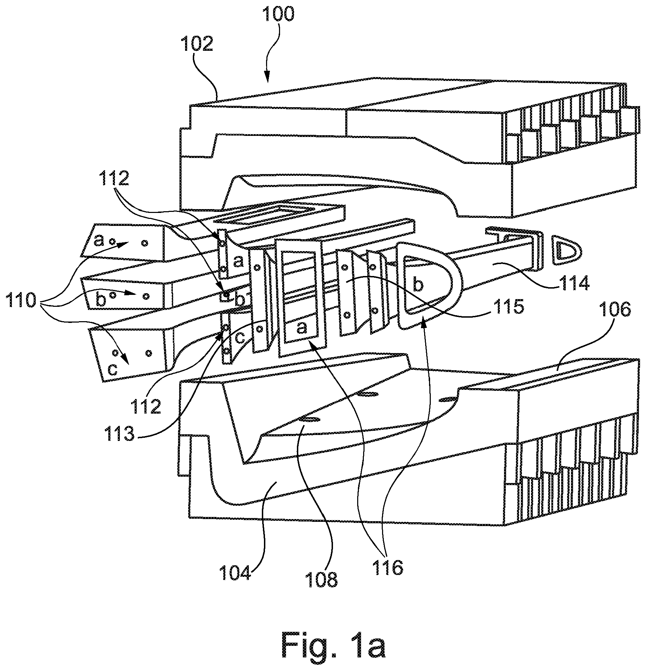

Figure 1a shows an exploded view of a composite part manufacturing tooling assembly according to an embodiment of the invention.

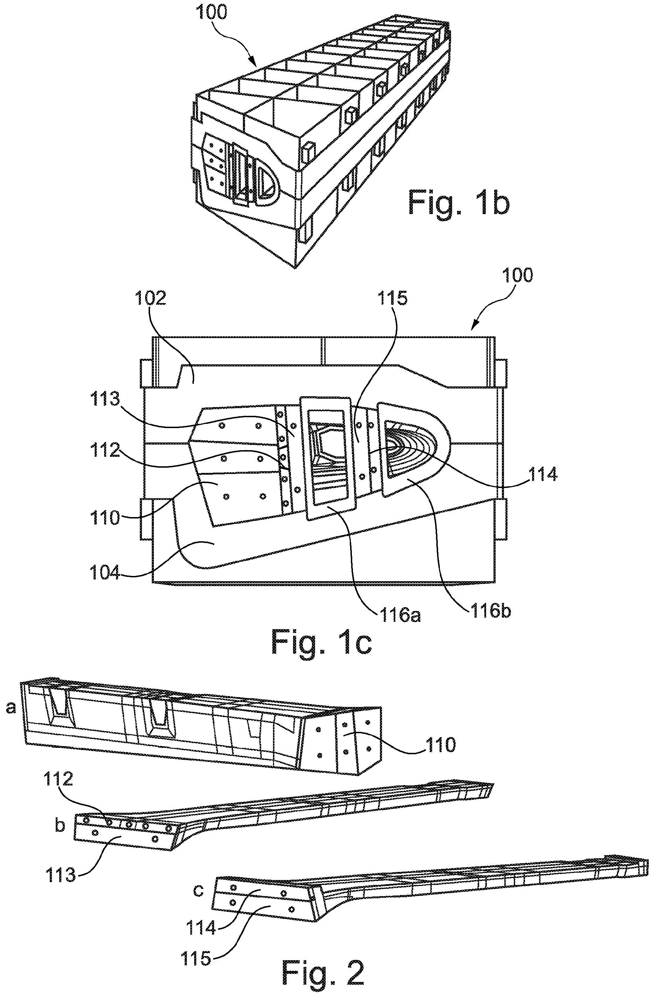

Figure 1b shows a perspective view of the composite part manufacturing tool assembly of Figure 1a in a closed configuration with all its components assembled.
Figure 1 c shows a front view of the composite part manufacturing tool assembly of Figures 1a and 1b in a closed configuration with all its components assembled.
Figure 2a shows an aft spar aft C as used in the tooling assembly 100 of Figure 1.
Figure 2b shows a three piece forward rear spar mandrel or tooling and a wedge mandrel as used in the tooling assembly of Figure 1.
Figure 2c shows a one-piece aft front spar mandrel or tooling and a wedge mandrel as used in the tooling assembly of Figure 1.
Figure 3 shows a rear spar preform and tooling.
Figure 4 shows a front spar preform and tooling.
Figure 5 shows spar pitch locating features on a Forward-aft cure mandrel for assisting in the correct location of the preform with the pitch control features of the mandrel.
Figure 6 shows a one piece skin preform with two reinforcing spar preforms inserted within the one piece skin.
Figure 7a shows a traditional bagging approach to manufacturing a preform of dry carbon for a composite part.

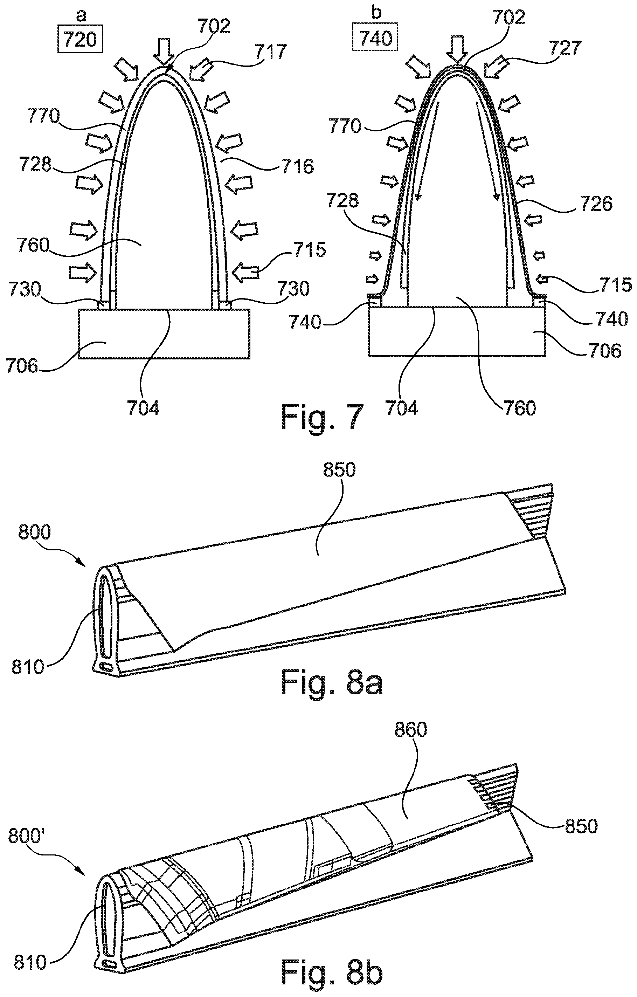

Figure 7 b shows a novel bagging approach to manufacturing a preform of dry carbon for a composite part.
Figure 8a shows a method of forming a dry carbon preform on a tooling base structure.
Figure 8b shows a modified method of forming a dry carbon preform on a tooling base structure isolating the CTE of the dry carbon preform from the CTE of the tooling base structure.

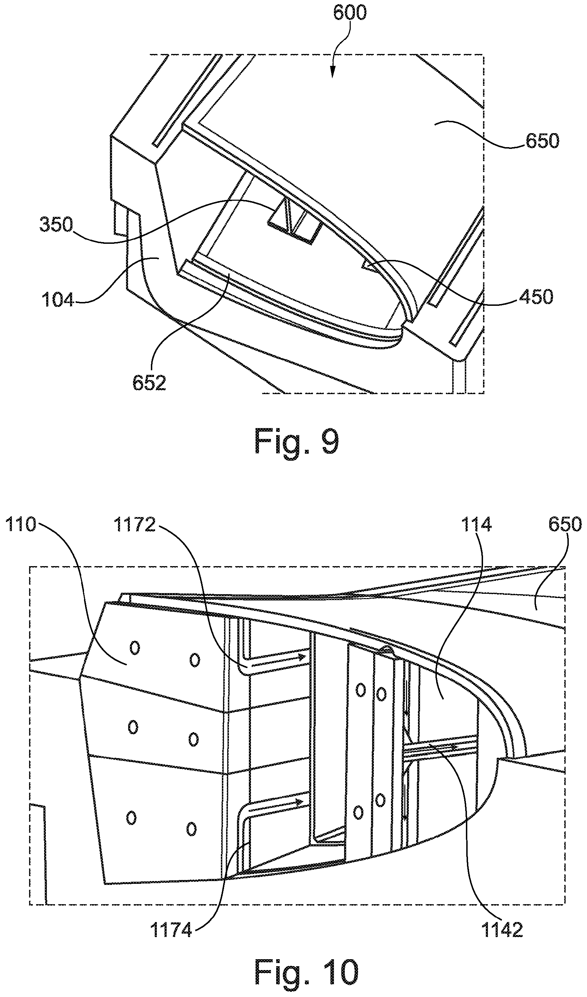

Figure 9 shows a peripheral resin raceway around the entire perimeter of the component/preform for outside-in resin injection methods.
Figure 10 shows cure mandrel resin feed lines (secondary raceways) for inside-out resin injection methods.

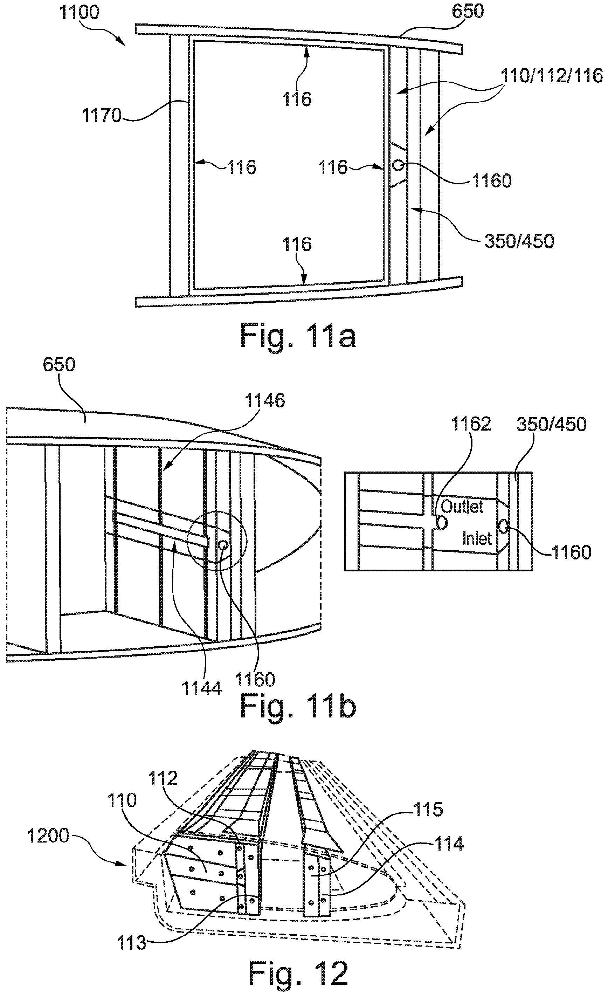

Figure 11a shows a cross-section of an internal resin feed raceway network for an inside-out resin infusion method employing an elastomeric bladder.
Figure 1b shows a perspective view of the internal resin feed network of figure 11a and an enlarged caption of the resin inlet-outlet ports.
Figure 12 shows a schematic representation of the utilisation of the high through thickness CTE of carbon fibre cure mandrel to achieve improved resin distribution at the infusion temperature and improved tooling release.

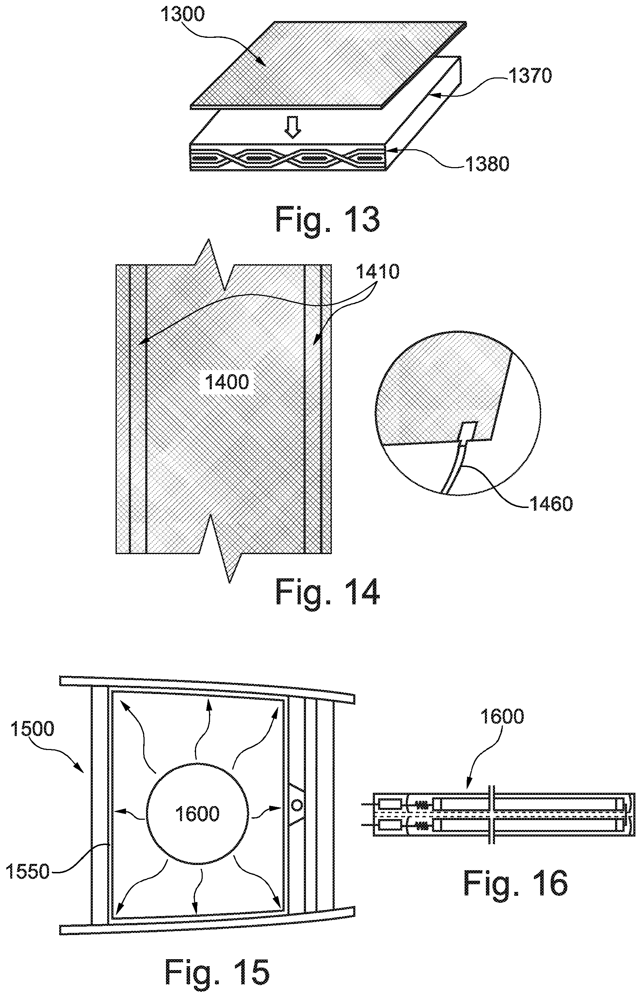

Figure 13 shows a schematic representation of an inter laminar film placed during lay up or introduced directly into the resin/matrix prior to infusion for heating the tooling components directly by induction.
Figure 14 shows a schematic representation of a heating fabric comprising short carbon fibres with embedded power conductors for heating the resin or tooling components directly.
Figure 15 shows schematic representation of a cross-section of an elastomeric bladder in the tooling arrangement according to an embodiment, the elastomeric bladder being heated directly from inside using infra-red energy.
Figure 16 shows a schematic representation of an infra-red heating element (e.g. IR lamp from quartz, halogen, tungsten or carbon).

### Detailed Description

Figure 1 shows an exploded view of a composite part manufacturing tooling assembly 100 according to an embodiment of the invention. The tooling assembly 100 comprises an upper mould portion 102 and a lower mould portion 104. The upper 102 and lower 104 mould portions are configured to meet at an interface 106 and define a cavity 108 therebetween. The cavity 108 is configured to receive a preform or preforms, further hard tooling (mandrels 110, 112, 113, 114, 115 and elastomeric bladders 116a and 116b. In this embodiment, the tooling assembly is for the manufacture a torque box for an aircraft wing, but other embodiments of the tooling assembly may have a different shape or internal arrangements of components for manufacturing other composite parts. The mould 100 may comprise any suitable material, although in this embodiment it comprises a low cost carbon mould.

Inside the cavity 108 there is configured to be multiple hard tooling components or mandrels and soft (or semi flexible or semi-rigid tooling components) disposed therebetween. Mandrels 110a, b, c may be aft spar aft mandrels and mandrels 112 a, b, c may be aft spar FWD carbon mandrels. Component 114 may be a forward spar mandrel. Mandrels 113 and 115 may be wedges configured to be inserted last when building the tooling assembly. These wedges 113, 115 may facilitate the removal of the bladder components 116a,b. All the mandrels 110, 112, 114 may preferably be carbon mandrels, or made from a material which matches the CTE of the preform(s) employed in the composite part. Portions 416 a and b show locations where the elastomeric bladder (soft tooling) is inserted in the tooling assembly 100.

As can be seen in figures 1a, 1b and 1c, a manufacturing method for a composite part comprises providing a mould, which in this case comprises an upper portion 102 and a lower portion 104 and disposing therebetween a series of mandrels (110, 112, 113, 114, 115) where it is desired to intimately and rigidly consolidate resin against a preform (not visible in these figures). Between the rigid mandrels 112 and 114 there is an elastomeric bladder 116a and between rigid mandrel 114 and a preform (not shown) configured to rest against the cavity 108 of the mould there is a second elastomeric bladder 116b. Mandrel wedges 113 and 115 may not run along the entire length of adjacent preform, bladder and/or other mandrel(s) . For example, a wedge mandrel may be placed in a location where the shape of a preform is not straight or deviates a certain degree from the main axis of a preform and/or adjacent mandrel. Providing a (smaller) wedge hard tooling component may facilitate extraction of the tooling components after the resin has been cured.

The elastomeric bladders 116a,b act as resilient elements that can accommodate for cumulative tolerances of the mandrels 110, 112, 113, 114, 115 or the mould while also applying a consolidation force to the resin. The elastomeric bladders may be located in areas of the composite part where dimensional tolerances are not highly critical. For example, when manufacturing a torque box for an aircraft wing, hard tooling only (e.g. solid mandrels) may be employed in the aft portion of the wing where fasteners and other critical elements of the wing may be coupled to or otherwise defined. Elastomeric bladders may be used in intermediate and/or forward sections of the wing which may not withstand as high degrees of stress as aft portions of the wing in use.

The bladders 116a,b comprise an elastomer and may comprise a reinforcement such as carbon fibre-reinforced elastomer. The bladders 116a,b may be vacuum integral. Vacuum integrity may be provided by the bladders 116a,b on their own (by way of their construction or the materials they employ) or it may be achieved by wrapping the bladder with or inserting inside the bladder a nylon bag. The bladder may be capable of withstanding raised temperatures( e.g. up to 205°C). The bladder may be autoclave capable. The bladder may be capable of withstanding at least 120 resin curing cycles without degradation.

The elastomeric bladder 116a, b may be employed to control areas between spars 350, 450 of the composite part. The elastomeric bladder may be intercalated or disposed between hard tooling elements of the assembly (e.g. between the mould 102, 104 and a mandrel 112, 114 or between two mandrels 112, 114. The elastomeric bladders 116a,b may be arranged next to the mandrel or under the preform (e.g. spar preform) or the mandrel. The elastomeric bladders 116a,bmay provide a consolidation pressure (Atmospheric or Autoclave) either directly on a preform or on a mandrel or other rigid tooling. The elastomeric bladders 116a,b may permit resin flow in plane (fibre direction ) and also out of plane (through the thickness of the fibre) by the bladders' resilience/flexibility.

Figure 2a shows an aft spar aft C 110 as used in the tooling assembly 100 of Figure 1. Figure 2b shows a three piece forward rear spar mandrel or tooling 112 as used in the tooling assembly 100 of Figure 1 together with wedge 113. Similarly, Figure 2c shows a one-piece aft front spar mandrel or tooling 114 together with wedge 115 as used in the tooling assembly 100 of Figure 1.

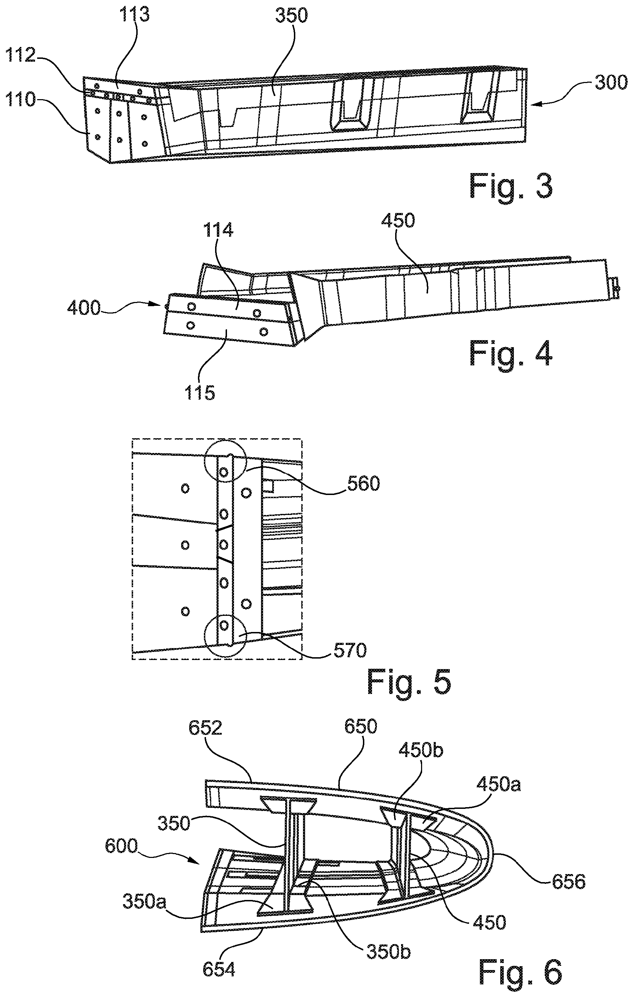

As shown in Figure 3, an assembly 300 of hard tooling and preform of this embodiment comprises a preform (rear) spar 350 sandwiched between the aft spar aft C mandrel 110 and the forward rear spar mandrel 112. Wedge mandrel 113 is also shown in the assembly. This arrangement 300 is employed because the aft spar is subject to stricter dimensional tolerances due to attachment of control surfaces (e.g. brackets or systems) to this region of the composite part (e.g. torque box for an aircraft wing).

Figure 4 shows an assembly 400 comprising forward spar mandrel 114 and wedge mandrel 115 with forward spar 450. The front spar 450 is configured to be sandwiched between mandrel 114 and bladder 116b. In this embodiment one of the spars is sandwiched between two hard tooling elements (mandrels 110 and 112) and another spar is sandwiched between a soft tooling element (bladder) 116b) and a hard tooling element (mandrels 114 and 115). In other embodiments all the spars may be supported by hard tooling and the soft tooling (bladder(s) may be disposed between hard tooling (mandrels) to mitigate compounding of multiple tolerances associated with the respective plurality of relatively rigid tooling. Therefore, the preform(s) may be supported by at least one hard tooling, but they may be supported by two hard tools or a hard tool and a soft tool. When supported by two hard tools, there may be a soft tool at least adjacent to a hard tool or in between two hard tools.

Figure 6 shows an assembly of preforms 600 with the forward 450 and rear 350 spars located inside a single skin (outer) preform 650.

In this embodiment, in order to form the spars 350, 450, a novel spar forming method may be employed. In this method no preform tools are required. Instead, plies of fibre carbon are accurately sized digitally prior to being sent to an ultrasonic fabric cutter. The net sized plies are then laid directly onto the solid carbon cure mandrels 110, 112, 113, 114, 115 to shape the preforms, thus achieving a very accurate net edge preform and no trim of excess length of fibres post forming was required. Advantageously, this results in a cheaper spar formation method as a step is dispensed with and no preform tools are required.

In other embodiments of the method, the preforms of dry fibre of the stiffeners (spars) of a torque box part may be formed into the required shape by traditional methods such as laying oversized plies of the dry fibre (e.g. carbon fibre) onto a preform tool and trimming the excess fibre onto a desired profile utilising integrated trim lines. The trimmed preform may then be removed, placed into the mould, and supported by its counter-part cure mandrel.

The preforms may be manufactured in two stages by forming two "C" and "inverted C" sections of each spar. As schematically represented in Figure 6, once all individual preforms were manufactured, the "C"-"inverted C" sections 350a (highlighted in Figure 6), 350b, 450a and 450b of each spar 350 and 450 were brought together to create the completed Front 450 and rear 350 "i"-shaped spar sections.

In order to assemble all the elements of the tooling arrangement 100, an outer skin preform of dry carbon 650 may be loaded into the mould (e.g. on one of the sections 102 or 104 of the mould). This assembly can be performed in any orientation. For example, if performed in a horizontal orientation an upper section 652 of the outer skin 650 may be lifted up to be able to insert all the components of the tooling assembly inside the outer skin 650. This may make it easier to assemble the components. However, lifting the upper section 652 of the skin relative to the lower section 654 of the outer skin 650 has the risk of deforming or affecting the leading edge 656 of the outer skin 650. Alternatively, the outer skin 650 may be loaded into the tooling assembly 100 in a vertical orientation and all the components (e.g. starting from the rear or aft section components) may be stacked inside the outer skin 650. This approach may not require holding the upper section 652 up and therefore may carry a lower risk of deformation of the leading edge 656 of the torque box.

After inserting the spar preform(s) the mandrels are placed into the tooling assembly 100. Locating features (e.g. spar pitch locating features 560 and 570 as shown in Figure 5) assist in the perfect location of the mandrels against the spars to ensure the correct geometry inside the torque box is achieved.

The mandrels and bladders may be wrapped in resin distribution medium (e.g. peel ply and flow mesh) to aid insertion and removal before resin injection and post resin curing as well as to aid even resin distribution across all surfaces and over and into the fibres of the preforms .

After installation of all of the mandrels, bladders and spars inside the outer skin preform 650 the other one of the sections of the mould (102 or 104 respectively) is installed such that the upper 102 and lower 104 mould portions meet at the interface 106. The mould is then secured (clamped) and the tooling arrangement is enclosed in bagging (e.g. nylon bagging) and vacuum is applied.

Resin is then injected via resin ports 1160 (Figures 11a and 11b) and exit via outlets 1162 (Figure 11b) to a network of primary 1144 and secondary 1146 raceways in the mandrels to deliver resin to all the areas of the interior of the outer skin 650 and spar350, 450 preforms (see Figures 9-12). The resin raceways form a network of voids or channels on the hard tooling (e.g. on the mandrels).

The resin raceways provide a path or the resin to completely infuse the composite part and/or preform (e.g. cover the entire surface and penetrate voids between fibres of the preform - or infuse in plane and through the thickness of the fibres). For example, as shown in Figure 9, outer skin 650 comprises a primary raceway 652 along its perimeter to efficiently distribute resin across the entire surface of the outer skin 650. Peripheral resin feed networks by infusing the components from the outside to the inside, thus facilitating the requirements for vacuum ports (not shown) to take extract remaining trapped air or volatiles at it.

In scenarios of torque box manufacturing of aircraft wings employing a close mould with aerofoil section where the stiffening members are not in way of primary resin raceway, it is necessary to integrate resin feed lines into the cure/mandrel tooling to facilitate adequate resin delivery to the stiffening members.

Therefore, in addition to or instead of peripheral raceways on the outer skin, the resin infusion may take place from the inside-out. This may be achieved by infusing the resin directly into the cure mandrel. The resin travels initially internally within the mandrel before entering an eternal resin feed network on the face of the mandrel. For example, the tooling may comprise cure mandrel resin feed lines (primary and secondary raceways) 1172, 1174, 1142 as shown in Figure 10. The cure mandrel feed lines (primary 1144 and secondary 1146 raceways as shown in Figures 10, 11a and 11b) may facilitate adequate resin delivery to the stiffening members or preforms 650, 350, 450. As shown in Figure 11a elastomeric bladder 116 exerts a consolidation force (e.g. by applying a positive pressure inside the bladder - e.g. around 1 bar/amt or any suitable pressure). This consolidation pressure acts on the mandrels and on any resin in contact with the bladder 116. To further facilitate resin infusion, the elastomeric bladder and/or any mandrels may be wrapped in a resin distribution medium (e.g. peel ply and/or flow mesh) 1170 (Figure 11a) which is "fed" by the mandrel raceway channels 1144, 1146.

Figure 7a depicts a traditional preform forming technique 720 involving laying dry fibre plies 728 (e.g. dry carbon) on a forming tool 760 for imparting the dry carbon 728 the desired shape. The arrangement is bagged up in a nylon bag 770, the bag 770 is clamped immediately adjacent to the forming tool 760 (or profile or outer surface thereof) at clamping locations 730 and vacuum is applied. The bag 770 may be slack when no vacuum is applied and may follow the profile of the forming tool 760 under pressure differential (vacuum). The outline of the bag 770 follows the outline of the forming tool 760 along all or most of the length and width of the forming tool 760. The bag is secured over the forming tool and to a tooling base 706 in a substantially straight or cylindrical configuration. The force applied on the dry fibre 728 (by the pressure differential and the bag) is equal across the entire profile of the preform or forming tool (e.g. pressure on points 717 = pressure on point 716 = pressure on point 715. However, with these technique it is common to obtain wrinkles at the highlight 702 (at the apex or top), e.g. if there is slack fibre.

In contrast, in the novel stretch-forming technique described herein (Figure 7b), the reinforcement fibre 728 (e.g. dry carbon fibre) is laid on the forming tool 760 and bagged up (e.g. in a nylon bag or a silicone membrane 770), clamping the bag 770 away from the forming tool at clamping locations 740. The clamping locations 740 are far away enough from the forming tool (towards its periphery) so as to allow the bag to provide tension at a leading end of the forming tool and having enough slack material when at atmospheric pressure to allow the bag to contact the forming tool under vacuum without breaking.

Therefore, the bag 770 (intimately) contacts one end of the forming tool 702 and it is stretched down and away from the master in a flared or triangular configuration . As it can be seen in Figures 7 and b, clamping locations 740 are further away from the forming tool 760 than clamping locations 730 in traditional forming methods. The stretch-forming technique ensures the consolidation force is applied gradually from a leading edge of the preform aft-wards. The bag may be tight/stretched at one end (the end disposed on the top portion of the forming tool) and it may be slack at the opposite end (the end near the base or bridge of the forming tool) at atmospheric pressure. Under vacuum (negative pressure differential), the bag will contact the forming tool and fibres laid thereon along the entire length of the forming tool but the force applied by the bag is greater in areas where the bag is under greater tension (e.g. at the top) than in areas where is under lower tension (slack, at the bottom). Under pressure differential (vacuum), the bag applies greater consolidation force on the fibres on the locations 727 where there is intimate contact between the bag and the fibres/forming tool. The further away the bag is from the forming tool, the lower the consolidation force that is applied to the fibres/forming tool Therefore, the consolidation force is greater at 727 than at 726, and it is even lower at 715. The stretch-forming technique may produce a seamless integral leading edge on the preform (i.e. at the highlight or top 702). The method may comprise forming the skin preform as a single piece to produce a seamless integral surface, for example a seamless integral leading edge. The method may comprise washing/ironing all slack fibre to the periphery. This may avoid creases or wrinkles, particularly on leading edges of the part which are obtained with other prior art methods.

Figure 8a shows a traditional method 800 of forming a dry carbon preform on a tooling base structure. comprising laying carbon fibre/dry carbon on a tooling base (or forming tool) 810 and shaping the preform 850 (e.g. the single skin preform) against the tooling base 810 at a temperature above room temperature (e.g. about 120°C-135°C). When the CTE of the tooling base 810 and the CTE of the preform 850 do not match, differences in cooling rates between the materials can cause the dry carbon of the preform to form wrinkles from slack fibres in certain regions (e.g. at a leading edge).

The tooling base 810 may comprise any suitable material that is usable at a temperature range of up to 205 °C and pressure of up to 7 bar and is geometrically correct. For example the tooling base 810 may comprise metal, invar, carbon fibre, polyurethane, or any other suitable material capable of withstanding the conditions of the method (temperature, pressure, forces involved -in autoclave (120-205 °C and a raised pressure of up to 7 bar) or out of autoclave (e.g. at atmospheric pressure in an oven at a temperature of about 120°C-135°C). The tooling base 810 may be a solid metallic tooling, which may provide rapid heating and cooling and it is autoclave-compatible. In this embodiment tooling base may be made of polyurethane or any other low-cost carbon tooling to minimise manufacture costs. The CTE of polyurethane does not match the CTE of the carbon fibre of the preform and therefore wrinkles can be formed upon cooling.

In Figure 8b the problem is solved by forming a carbon-reinforced resin mould 860 directly on the base tooling 810 and then forming the preform 850 on the carbon reinforced resin mould 860 disposed on the base tooling 810.

The method comprises laying a slip skin (e.g. a carbon fibre slip skin) onto the tooling base 810 and machining it to form a carbon-reinforced resin mould 860. The method may comprise temporarily or removably fixing the slip skin to the tooling base 810 for machining the slip skin into the shape of the tooling base forming tool 810 (i.e. to form the slip skin mould 860). The slip skin may be fixed to the tooling base at a first end of the slip skin. After machining, the slip skin mould 860 may be unpinned and simply laid on the tooling base 810 (float).

The method comprises laying dry carbon on the (shaped) slip skin mould 860 disposed on the tooling base 810, forming the preform (e.g. single-skin preform) at a raised temperature (e.g. 120-205 °C), and allowing the preform 850 to cool down on the slip skin mould 860.

The coefficient of thermal expansion (CTE) of the slip skin mould 860 matches the coefficient of thermal expansion of the preform material (carbon fibre). Advantageously, matching the CTE of the slip skin 860 and the preform 850 allows the preform 850 to cool down independently from the tooling base. This in turn minimises the formation of creases or wrinkles on the preform upon cooling.

Figure 12 shows a schematic representation of the utilisation of the high through thickness CTE of carbon fibre cure mandrels to achieve improved resin distribution at the infusion temperature and improved tooling release.

In some embodiments of the method, the mandrels may be solid carbon fibre cure mandrels 110,112, 113, 114, 115 (Figure 12). Carbon fibre cure tooling offers the benefits of being CTE matched to the composite part. Furthermore, it is possible to design the tools to benefit of their unique properties, specifically the material low in-plane CTE or high CTE out-of-plane behaviour. In the torque box scenario of Figure 12, the aft/rear spar is fully enclosed in solid carbon tooling 110, 112, 113. This is to demonstrate tolerances can be well controlled as the aft spar is a critical interface for trailing edge attachments such as flaps, ailerons (or a combination flaperons etc). The carbon tooling 110, 112, 113, 114, 115 can be arranged/manufactured in such a way as to utilise its high through thickness CTE to achieve improved air extraction at room temperature, improved resin distribution (reduced infusion/time) at infusion temperature and improved tooling release.

The method may comprise directly heating at least a portion of the tooling assembly, such as directly heating the material a carbon fibre mandrel and/or heating the elastomeric bladder from inside. Heating may be achieved by induction and/or infra-red heating.

The material of the mandrel(s) may have conductive capability to allow direct heating of the tooling. If the material of the tooling is not conductive on its own (e.g. plastics or glass0, induction can be used to heat an electrically-conductive susceptor which then transfer the heat to the non-conducting materials. For example, the conductive susceptors can be in the form of graphite, iron balls, or carbon black. Introduction of the susceptors into the tooling can be in the form of interlaminar films placed during lay up (Figure 12 and 13) or introduced directly into the resin or matrix prior to infusion. For example, as represented in Figure 12, a film 1300 with thermally conductive susceptor particulate may be laid on top of the matrix 1370 of the rigid tooling. Heating the susceptor by induction will in turn transfer heat to the matrix 1370 by conduction and reach the fibre reinforcement 1380 of the tooling, to further heat the tooling along the fibres 1380 by conduction.

The matrix of the solid tooling may also have a heating fabric embedded therein. For example, as shown in Figure 14, the heating fabric 1400 may comprise short carbon fibres and it may have embedded power conductors 1410 with a power connector 1460 to heat the fabric and transfer heat to the matrix of the hard tooling by conduction.

Additionally, in order to improve the thermal conductivity of the hard tooling (e.g. mandrel or mould), the hard tooling may be manufactured comprising pitch-base fibres instead of (traditional and less conductive) PAN based fibres. Pitch based fibres have a highly oriented molecular structure. By virtue of the initial melt spinning during which the precursor is pulled while being heated, the process may result in an excellent thermal conductivity up to 800W/(m*k), (Copper =~400W/m*k). Hard tooling (e.g. mandrels) with pitch based fibres may be capable of being integrally heated e.g. by induction.

The matrix materials of the hard tooling can be epoxy (infusion or prepreg), bismaleimide (BMI) set resin, benzoxazine, and the like. The reinforcement materials of the hard tooling may be any suitable materials, but preferably carbon (ultra high modulus (UHM), high modulus (HM), harmonized tariff schedule (HTS), intermediate modulus (IM), etc.)

Figure 15 shows a section of a tooling arrangement 1500 with heating of the internal cavity the soft tooling (bladder) 1550 (flexible or semi-flexible tooling) may be heated. The bladder 1150 is hollow and defines a cavity inside which there is an infra-red heating element or tube 1600. The IR heating element or tube 1580 (IR heater) may be capable of efficiently heating up the bladder and help in the curing process of the resin. The IR heating element 1600 (e.g. as shown in Figure 16 may comprise Quartz, halogen, tungsten or carbon filament.

The method may employ heating the bladder as well as integrally heating the hard tooling (e.g. mandrel(s)) to improve performance. Employing tooling that can be heated (e.g. bladder and/or mandrel(s) may speed up the heating rate and therefore allow for out of autoclave infusion and curing of resin. This may in turn decrease the costs of manufacture of composite parts. Alternatively, the method may also be performed in an autoclave, for example using solid metallic hard tooling (mandrel(s) and mould(s) for rapid heating).

## Claims

1. A method of manufacturing a composite part, the method comprising:
forming dry carbon fibre into a preform;
providing a tooling assembly (100) comprising; a mould (102, 104); a plurality of relatively rigid tools or mandrels (110, 112, 113, 114 115); and an elastomeric bladder (116a, 116b) arranged intermediate the relatively rigid tools or mandrels so as to mitigate compounding of multiple tolerances associated with the plurality of relatively rigid tools or mandrels;
loading the dry carbon fibre preform into the mould;
closing the tooling assembly with the dry carbon preform and the elastomeric bladder therewithin;
sealing the tooling assembly for vacuum;
applying a vacuum to the tooling assembly with the dry carbon preform and the mandrel and the elastomeric bladder therewithin;
injecting a resin into the mould; and
heating to cure the composite part.

2. The method of claim 1, wherein the method comprises applying a consolidation force on the composite part by way of a pressure differential with the elastomeric bladder (116a, 116b).

3. The method of any preceding claim, wherein the method comprises a closed mould manufacturing method, with the composite part being formed between at least two mould tools (102, 104), optionally wherein the two mould tools are closed and sealed for vacuum integrity at a temperature in a range of ambient temperature to 205°C.

4. The method of any preceding claim, wherein a compound tolerance associated with a dimension defining a portion of the torque box within the mould (102, 104) is a compounding of tolerances of both the relatively rigid tools or mandrels and the elastomeric bladder/s.

5. The method of any preceding claim, wherein the manufacture is performed out of autoclave.

6. The method of any preceding claim, wherein at least one of:
the method includes a vacuum-only infusion phase, at least during or throughout an initial phase/s of infusion; and during or throughout at least a majority of the infusion; and/or
resin infusion is performed at an infusion temperature, the infusion temperature being in a range of 30°C to 135°C; and/or
the infusion does not require or involve an application of external pressure, such as an infusion pressure, at least during or throughout an initial phase/s; and optionally only involves an application of external pressure during a final phase of the infusion; and/or.
wherein curing is performed at a curing temperature, the curing temperature being in a range of 50°C to 205°C

7. The method of any preceding claim, wherein the resin is supplied via one or more raceway channels (1144, 1146) on the tooling assembly (100), the raceway channels being selected from: peripheral; primary; secondary; and/or mandrel-fed, optionally wherein the elastomeric bladder (116a, 116b) is wrapped in a resin distribution medium (1170).

8. The method of any preceding claim, wherein the method comprises assembling the respective elastomeric bladder/s (116, 116b) and the mandrel/s (110, 112, 113, 114 115) in a first assembly step; overlaying the preform (350, 450, 650) on or around the assembled elastomeric bladder/s and mandrel/s in a second assembly step and then closing within the tooling assembly (100), prior to the sealing for vacuum, optionally wherein at least one of:
the method comprises installing a spar preform (350, 450) and the elastomeric bladder (116a. 116b) in the first assembly step, before the initial preform (650) of the skin has been overlaid; and/or
the method comprises performing at least the first assembly step with the respective elastomeric bladder/s and the mandrel/s in a first orientation (e.g. vertical orientation), and optionally wherein the method comprises translating the assembled elastomeric bladder/s and the mandrel/s from the first orientation to a second orientation substantially perpendicular to the first orientation (e.g. from a vertical orientation to a horizontal orientation).

9. The method of any one of claim 1 to 7, wherein the method comprises inserting the elastomeric bladder (116a, 116b) into the mould (102, 104) after the preform has been loaded, optionally wherein at least one of:
the method comprises inserting the elastomeric bladder into the preform in the mould longitudinally, such that the elastomeric bladder is installed within the preform; and/or
the method comprises wrapping the elastomeric bladder in peel ply and/or flow mesh (1170) for insertion.

10. The method of any preceding claim, wherein the method comprises at least one of:
forming at least one spar (350, 450), the elastomeric bladder (116a, 116b) being associated with a spar-forming mandrel; optionally wherein the method comprises installing a spar preform and the elastomeric bladder after the initial preform of the skin has been loaded or wherein the method comprises installing a spar preform (350, 450) and the flexible elastomeric bladder (116a, 116b) in the preform of the skin before loading the preform of the skin (650) on the tooling.

11. The method of any preceding claim, wherein the method comprises forming the preform as a one-piece skin preform (650), the one-piece skin comprising a wrap-around preform to define upper and lower skin portions with the one-piece skin preform, optionally wherein the one-piece skin preform includes a leading edge (656), optionally wherein at least one of:
the one-piece skin preform varies in thickness from root to tip; and optionally comprises ply features, such as ply ramps and/or build-ups along its length; and/or
the method comprises temporarily holding open the one-piece skin preform (650) for the installation of the spar preform/s (350, 450) and/or the mandrel/s (110, 112, 113, 114 115) and/or the elastomeric bladder/s (116a, 116b).

12. The method of manufacturing of any preceding claim, wherein the composite part comprises one or more of: a flight control surface; a wing, or at least a section or portion thereof; a flap; an aileron; a H-stab; a V-stab.

13. The method of any preceding claim, wherein the method comprises forming dry carbon fibre into at least two preforms, the two preforms defining an upper skin preform and a lower skin preform.

14. A composite part manufacturing tooling assembly (100), the tooling assembly comprising a mould (102, 104); a plurality of relatively rigid tools or mandrels (110, 112, 113, 114 115); and a elastomeric bladder (116a, 116b) arranged intermediate the relatively rigid tools or mandrels so as to mitigate compounding of multiple tolerances associated with the plurality of relatively rigid tools or mandrels; wherein the elastomeric bladder and the plurality of relatively rigid tools or mandrels are incorporated in the tooling assembly for vacuum sealing.

15. The tooling assembly of claim 14, wherein the elastomeric bladder (116a, 116b)comprises a vacuum integral bag (770), optionally wherein the elastomeric bladder comprises a nylon bag inside the elastomeric bladder; and/or wherein the bladder is wrapped in resin distribution medium (1170).

## Patentansprüche

1. Verfahren zum Fertigen eines Verbundteils, wobei das Verfahren Folgendes umfasst:
Formen trockener Kohlenstofffasern zu einem Vorformling;
Bereitstellen einer Werkzeugbaugruppe (100), die Folgendes umfasst: eine Form (102, 104); eine Vielzahl von relativ starren Werkzeugen oder Dornen (110, 112, 113, 114 115); und einen elastomeren Balg (116a, 116b), der zwischen den relativ starren Werkzeugen oder Dornen angeordnet ist, um ein Kumulieren mehrerer Toleranzen, die der Vielzahl von relativ starren Werkzeugen oder Dornen zugeordnet sind, zu verringern;
Laden des trockenen Kohlenstofffaser-Vorformlings in die Form;
Schließen der Werkzeugbaugruppe mit dem trockenen Kohlenstoff-Vorformling und dem elastomeren Balg darin;
Abdichten der Werkzeugbaugruppe für ein Vakuum;
Anlegen eines Vakuums an die Werkzeugbaugruppe mit dem trockenen Kohlenstoff-Vorformling und dem Dorn und dem elastomeren Balg darin;
Einspritzen eines Harzes in die Form; und
Erhitzen, um das Verbundteil zu härten.

2. Verfahren nach Anspruch 1, wobei das Verfahren Aufbringen einer Verfestigungskraft auf das Verbundteil mittels einer Druckdifferenz mit dem elastomeren Balg (116a, 116b) umfasst.

3. Verfahren nach einem vorhergehenden Anspruch, wobei das Verfahren ein Verfahren zur Fertigung mit einer geschlossenen Form umfasst, wobei das Verbundteil zwischen mindestens zwei Formwerkzeugen (102, 104) geformt wird, wobei die zwei Formwerkzeuge optional geschlossen und bei einer Temperatur in einem Bereich einer Umgebungstemperatur bis 205° C auf Vakuumintegrität abgedichtet werden.

4. Verfahren nach einem vorhergehenden Anspruch, wobei eine Gesamttoleranz, die einer Abmessung zugeordnet ist, die einen Abschnitt des Torsionskastens innerhalb der Form (102, 104) definiert, ein Kumulieren von Toleranzen sowohl der relativ starren Werkzeuge oder Dorne als auch des/der elastomeren Balgs/Balge ist.

5. Verfahren nach einem vorhergehenden Anspruch, wobei die Fertigung außerhalb eines Autoklaven durchgeführt wird.

6. Verfahren nach einem vorhergehenden Anspruch, wobei mindestens eines von Folgenden gilt:
das Verfahren enthält eine reine Vakuuminfusionsphase, mindestens während oder ganz während einer anfänglichen Infusionsphase(n); und während oder ganz während mindestens eines Großteils der Infusion; und/oder
die Harzinfusion wird bei einer Infusionstemperatur durchgeführt, wobei die Infusionstemperatur in einem Bereich von 30 °C bis 135 °C liegt; und/oder
die Infusion erfordert oder involviert mindestens während oder ganz während einer Anfangsphase/n keine Anwendung von externem Druck, wie etwa einem Infusionsdruck; und involviert optional nur eine Anwendung von externem Druck während einer Endphase der Infusion; und/oder
wobei das Härten bei einer Härtungstemperatur durchgeführt wird, wobei die Härtungstemperatur in einem Bereich von 50 °C bis 205 °C liegt.

7. Verfahren nach einem vorhergehenden Anspruch, wobei das Harz über einen oder mehrere Laufbahnkanäle (1144, 1146) an der Werkzeugbaugruppe (100) zugeführt wird, wobei die Laufbahnkanäle ausgewählt sind aus: peripher; primär; sekundär; und/oder dorngespeist, wobei optional der elastomere Balg (116a, 116b) in ein Harzverteilungsmedium (1170) gehüllt ist.

8. Verfahren nach einem vorhergehenden Anspruch, wobei das Verfahren Montieren des/der jeweiligen elastomeren Balgs/Balge (116, 116b) und des/der Dorns/Dome (110, 112, 113, 114 115) in einem ersten Montageschritt; Überlagern des Vorformlings (350, 450, 650) auf oder um den/die montierten elastomeren Balg/Balge und den/die Dorn/Dorn/e in einem zweiten Montageschritt und dann Schließen innerhalb der Werkzeugbaugruppe (100) vor dem Abdichten für Vakuum, umfasst, optional wobei mindestens eines von Folgenden gilt:
das Verfahren umfasst das Installieren eines Holmvorformlings (350, 450) und des elastomeren Balgs (116a, 116b) im ersten Montageschritt, bevor der anfängliche Vorformling (650) der Außenhaut überlagert wurde; und/oder
das Verfahren umfasst Durchführen mindestens des ersten Montageschritts mit dem/den jeweiligen elastomeren Balg/en und dem/den Dorn/en in einer ersten Ausrichtung (z. B. vertikalen Ausrichtung), und wobei das Verfahren optional Verschieben des/der montierten elastomeren Balgs/Balge und des/der Dorns/Dorne aus der ersten Ausrichtung in eine zweite Ausrichtung, die im Wesentlichen senkrecht zu der ersten Ausrichtung ist (z. B. aus einer vertikalen Ausrichtung in eine horizontale Ausrichtung), umfasst.

9. Verfahren nach einem der Ansprüche 1 bis 7, wobei das Verfahren Einsetzen des elastomeren Balgs (116a, 116b) in die Form (102, 104) umfasst, nachdem der Vorformling geladen wurde, optional wobei mindestens eines von Folgenden gilt:
das Verfahren umfasst Einsetzen des elastomeren Balgs in den Vorformling in der Form in Längsrichtung, sodass der elastomere Balg innerhalb des Vorformlings installiert ist; und/oder
das Verfahren umfasst Einhüllen des elastomeren Balgs in eine Abziehlage und/oder ein Flussnetz (1170) zum Einsetzen.

10. Verfahren nach einem vorhergehenden Anspruch, wobei das Verfahren mindestens eines von Folgenden umfasst:
Formen mindestens eines Holms (350, 450), wobei der elastomere Balg (116a, 116b) einem Holm formenden Dorn zugeordnet ist; optional wobei das Verfahren Installieren eines Holmvorformlings und des elastomeren Balgs umfasst, nachdem der anfängliche Vorformling der Außenhaut geladen wurde, oder wobei das Verfahren Installieren eines Holmvorformlings (350, 450) und des flexiblen elastomeren Balgs (116a, 116b) in den Vorformling der Außenhaut vor dem Laden des Vorformlings der Außenhaut (650) auf das Werkzeug umfasst.

11. Verfahren nach einem vorhergehenden Anspruch, wobei das Verfahren Formen des Vorformlings als einstückiger Außenhautvorformling (650) umfasst, wobei die einstückige Außenhaut einen umhüllenden Vorformling umfasst, um einen oberen und einen unteren Außenhautabschnitt mit dem einstückigen Außenhautvorformling zu definieren, optional wobei der einstückige Außenhautvorformling eine Vorderkante (656) enthält, optional wobei mindestens eines von Folgenden gilt:
der einstückige Außenhautvorformling variiert in der Dicke von Wurzel zu Spitze; und umfasst optional Lagenmerkmale, wie z. B. Lagenrampen und/oder Aufbauten entlang seiner Länge; und/oder
das Verfahren umfasst vorübergehendes Offenhalten des einstückigen Außenhautvorformlings (650) für die Installation des/der Holmvorformlings/Holmvorformlinge (350, 450) und/oder des Dorns/der Dome (110, 112, 113, 114 115) und/oder des/der elastomeren Balgs/Balge (116a, 116b).

12. Verfahren zum Fertigen nach einem vorhergehenden Anspruch, wobei das Verbundteil eines oder mehrere von Folgendem umfasst: eine Flugsteueroberfläche; einen Flügel oder mindestens einen Bereich oder Abschnitt davon; eine Klappe; ein Querruder; ein Höhenleitwerk; ein Seitenleitwerk.

13. Verfahren nach einem vorhergehenden Anspruch, wobei das Verfahren Formen von trockener Kohlenstofffasern zu mindestens zwei Vorformlingen umfasst, wobei die zwei Vorformlinge eine obere Außenhautvorform und eine untere Außenhautvorform definieren.

14. Werkzeugbaugruppe (100) zum Fertigen eines Verbundteils, wobei die Werkzeugbaugruppe eine Form (102, 104); eine Vielzahl von relativ starren Werkzeugen oder Dornen (110, 112, 113, 114 115); und einen elastomeren Balg (116a, 116b), der zwischen den relativ starren Werkzeugen oder Dornen angeordnet ist, um ein Kumulieren mehrerer Toleranzen, die der Vielzahl von relativ starren Werkzeugen oder Dornen zugeordnet sind, zu verringern, umfasst; wobei der elastomere Balg und die Vielzahl von relativ starren Werkzeugen oder Dornen in die Werkzeugbaugruppe zum Vakuumabdichten integriert sind.

15. Werkzeugbaugruppe nach Anspruch 14, wobei der elastomere Balg (116a, 116b) einen integrierten Vakuumbeutel (770) umfasst, wobei der elastomere Balg optional einen Nylonbeutel innerhalb des elastomeren Balgs umfasst; und/oder wobei der Balg in Harzverteilungsmedium (1170) eingehüllt ist.

## Revendications

1. Procédé de fabrication d'une pièce composite, le procédé comprenant :
la formation d'une fibre de carbone sèche en une préforme ;
la fourniture d'un ensemble d'outillage (100) comprenant : un moule (102, 104) ; une pluralité d'outils ou de mandrins relativement rigides (110, 112, 113, 114 115) ; et une vessie élastomère (116a, 116b) agencée entre les outils ou mandrins relativement rigides de façon à atténuer la combinaison de tolérances multiples associées à la pluralité d'outils ou mandrins relativement rigides ;
le chargement de la préforme de fibre de carbone dans le moule ;
la fermeture de l'ensemble d'outillage avec la préforme sèche de carbone et la vessie élastomère à l'intérieur ;
le scellage de l'ensemble d'outillage pour le vide ;
l'application d'un vide à l'ensemble d'outillage avec la préforme sèche de carbone et le mandrin et la vessie élastomère à l'intérieur ;
l'injection d'une résine dans le moule ; et
le chauffage pour durcir la pièce composite.

2. Procédé de la revendication 1, ledit procédé comprenant l'application d'une force de consolidation sur la pièce composite au moyen d'un différentiel de pression avec la vessie élastomère (116a, 116b).

3. Procédé d'une quelconque revendication précédente, ledit procédé comprenant un procédé de fabrication de moule fermé, la pièce composite étant formée entre au moins deux outils de moule (102, 104), éventuellement lesdits deux outils de moule étant fermés et scellés pour l'intégrité du vide à une température dans une plage de température ambiante à 205°.

4. Procédé d'une quelconque revendication précédente, une tolérance combinée associée à une dimension définissant une partie du caisson de torsion à l'intérieur du moule (102, 104) est une combinaison de tolérances à la fois des outils ou mandrins relativement rigides et de la ou des vessies élastomères.

5. Procédé d'une quelconque revendication précédente, ladite fabrication étant réalisée en autoclave.

6. Procédé d'une quelconque revendication précédente, au moins un parmi :
ledit procédé comprenant une phase d'infusion sous vide uniquement, au moins durant ou tout au long d'une ou plusieurs phases initiales de perfusion ; et durant ou tout au long d'au moins une majorité de la perfusion ; et/ou
ladite infusion de résine étant réalisée à une température d'infusion, la température d'infusion étant comprise dans la plage allant de 30°C à 135°C ; et/ou
ladite infusion ne nécessitant pas ou n'impliquant pas une application de pression externe, telle qu'une pression d'infusion, au moins durant ou tout au long d'une ou plusieurs phases initiales ; et éventuellement impliquant uniquement une application de pression externe durant une phase finale de l'infusion ; et/ou
ledit durcissement étant réalisé à une température de durcissement, la température de durcissement étant comprise entre 50°C et 205°C.

7. Procédé d'une quelconque revendication précédente, ladite résine étant fournie par l'intermédiaire d'un ou plusieurs canaux de chemin (1144, 1146) sur l'ensemble d'outillage (100), les canaux de chemin étant sélectionnés parmi : périphérique ; primaire ; secondaire ; et/ou alimentés par un mandrin, éventuellement ladite vessie élastomère (116a, 116b) étant enveloppée dans un milieu de distribution de résine (1170).

8. Procédé d'une quelconque revendication précédente, ledit procédé comprenant l'assemblage de la ou des vessies élastomères respectives (116, 116b) et du ou des mandrins (110, 112, 113, 114, 115) dans une première étape d'assemblage ; la superposition de la préforme (350, 450, 650) sur ou autour de la ou des vessies élastomères et du ou des mandrins assemblés dans une seconde étape d'assemblage et ensuite la fermeture à l'intérieur de l'ensemble d'outillage (100), avant le scellement sous vide, éventuellement au moins un parmi :
ledit procédé comprenant l'installation d'une préforme de longeron (350, 450) et de la vessie élastomère (116a, 116b) dans la première étape d'assemblage, avant que la préforme initiale (650) de la peau ait été recouverte ; et/ou
ledit procédé comprenant la réalisation d'au moins la première étape d'assemblage avec la ou les vessies élastomères respectives et le ou les mandrins dans une première orientation (par exemple une orientation verticale), et éventuellement ledit procédé comprenant la translation de la ou des vessies élastomères assemblées et du ou des mandrins de la première orientation à une seconde orientation sensiblement perpendiculaire à la première orientation (par exemple d'une orientation verticale à une orientation horizontale).

9. Procédé de l'une quelconque des revendications 1 à 7, ledit procédé comprenant l'insertion de la vessie élastomère (116a, 116b) dans le moule (102, 104) après que la préforme a été chargée, éventuellement au moins un parmi :
le procédé comprenant l'insertion longitudinalement de la vessie élastomère dans la préforme dans le moule, de sorte que la vessie élastomère soit installée à l'intérieur de la préforme ; et/ou
ledit procédé comprenant l'enveloppement de la vessie élastomère dans un pli pelable et/ou un maillage d'écoulement (1170) pour l'insertion.

10. Procédé d'une quelconque revendication précédente, ledit procédé comprenant au moins un parmi :
la formation d'au moins un longeron (350, 450), la vessie élastomère (116a, 116b) étant associée à un mandrin de formation de longeron ; éventuellement ledit procédé comprenant l'installation d'une préforme de longeron et de la vessie élastomère après que la préforme initiale de la peau a été chargée ou ledit procédé comprenant l'installation d'une préforme de longeron (350, 450) et de la vessie élastomère souple (116a, 116b) dans la préforme de la peau avant de charger la préforme de la peau (650) sur l'outillage.

11. Procédé d'une quelconque revendication précédente, ledit procédé comprenant la formation de la préforme sous la forme d'une préforme de peau monobloc (650), la peau monobloc comprenant une préforme enveloppante pour définir des parties de peau supérieure et inférieure avec la préforme de peau monobloc, éventuellement ladite préforme de peau monobloc comprenant un bord d'attaque (656), éventuellement au moins un parmi :
ladite préforme de peau monobloc variant en épaisseur d'une emplanture à une pointe ; et comprenant éventuellement des caractéristiques de pli, telles que des rampes de pli et/ou des accumulations sur sa longueur ; et/ou
ledit procédé comprenant le maintien temporaire ouvert de la préforme de peau monobloc (650) pour l'installation de la ou des préformes de longeron (350, 450) et/ou du ou des mandrins (110, 112, 113, 114 115) et/ou de la ou des vessies élastomères (116a, 116b).

12. Procédé de fabrication d'une quelconque revendication précédente, ladite pièce composite comprenant un ou plusieurs parmi : une surface de commande de vol ; une aile, ou au moins une section ou une partie de celle-ci ; un volet ; un aileron ; un stabilisateur horizontal ; un stabilisateur vertical.

13. Procédé d'une quelconque revendication précédente, ledit procédé comprenant la formation d'une fibre de carbone sèche en au moins deux préformes, les deux préformes définissant une préforme de peau supérieure et une préforme de peau inférieure.

14. Ensemble d'outillage de fabrication (100) de pièce composite, l'ensemble d'outillage comprenant un moule (102, 104) ; une pluralité d'outils ou de mandrins relativement rigides (110, 112, 113, 114 115) ; et une vessie élastomère (116a, 116b) agencée entre les outils ou mandrins relativement rigides de façon à atténuer la combinaison de tolérances multiples associées à la pluralité d'outils ou de mandrins relativement rigides ; ladite vessie élastomère et ladite pluralité d'outils ou mandrins relativement rigides étant incorporés dans l'ensemble d'outillage pour l'étanchéité sous vide.

15. Ensemble d'outillage de la revendication 14, ladite vessie élastomère (116a, 116b) comprenant un sac intégré sous vide (770), éventuellement ladite vessie élastomère comprenant un sac en nylon à l'intérieur de la vessie élastomère ; et/ou ladite vessie étant enveloppée dans un milieu de distribution de résine (1170).
